# FASCICULE DE BREVET EUROPEEN

(11) **EP 3 953 214 B1**
(45) Date de publication et mention de la délivrance du brevet: **20.11.2024**
(21) Numéro de dépôt: 20725781.7
(22) Date de dépôt: 09.04.2020
(51) Int. Cl.: B60R 7/04, B60R 11/02, B60R 13/02, B60J 5/04

(54) **DISPOSITIF DE VIDE-POCHE DE GARNISSAGE DE PORTIÈRE DE VÉHICULE**
MÜNZABLAGEVORRICHTUNG FÜR KRAFTFAHRZEUGTÜRVERKLEIDUNG
VEHICLE DOOR TRIM COIN TRAY DEVICE

(30) Priorité: 09.04.2019 FR 1903779
(43) Date de publication de la demande: 16.02.2022
(73) Titulaire: Stellantis Auto SAS, 78300 Poissy (FR)
(72) Inventeur: MONTAUBAN, Rodolphe, 91290 Arpajon (FR); LEGRAND, Fabrice, 78180 Montigny le Bretonneux (FR); OLLIE, Jean François, 78430 Louveciennes (FR)
(86) Numéro de dépôt international: PCT/FR2020/000101
(87) Numéro de publication internationale: WO 2020/208314

(56) Documents cités:
- WO-A1-2005/058649
- DE-A1- 102011 118 608
- JP-A- 2016 141 197
- US-A1- 2017 120 844

## Description

### DOMAINE TECHNIQUE DE L'INVENTION

La présente invention se rapporte au domaine des véhicules, en particulier des véhicules automobiles, et vise plus précisément un dispositif de vide-poche de garnissage de portière de véhicule.

Plus précisément, la présente invention concerne la fixation d'un tel dispositif de vide-poche de garnissage de portière de véhicule à une garniture de portière de véhicule.

### ETAT DE LA TECHNIQUE

Il est connu qu'une portière de véhicule, notamment de véhicule automobile, comprend, du côté de l'habitacle, une garniture de portière. Une telle garniture de portière comprend une ouverture pour permettre à un utilisateur de déposer des objets dans un dispositif de vide-poche intégré à la portière.

La portière de véhicule présente ainsi une structure multicouche avec, fixé à la garniture, le dispositif de vide-poche de garnissage de portière, puis, en continuant de progresser vers l'extérieur du véhicule, une doublure de portière à laquelle est également fixé le dispositif de vide-poche, du côté opposé à la garniture, puis la pièce de carrosserie correspondant à la couche extérieure de la portière, la doublure de portière étant fixée à ladite pièce de carrosserie.

Comme cela est connu, la garniture présente une forme creuse, avec un fond et une paroi latérale s'étendant orthogonalement au fond sur quelques centimètres, vers l'extérieur, autrement dit du côté opposé à l'habitacle.

L'ouverture pour accéder au dispositif de vide-poche est aménagée dans le fond. Le dispositif de vide poche de garnissage de portière présente une forme de plateau creux, avec un logement formé par une cavité concave prévue pour se trouver en vis-à-vis de l'ouverture de la garniture, le logement ayant un fond et une paroi latérale, le dispositif de vide-poche est par ailleurs fixé à la garniture de portière.

Plus précisément, dans l'état de l'art, la bordure périphérique du dispositif de vide-poche comporte des orifices pour permettre le passage de moyens de fixations dudit dispositif de vide-poche au fond de la garniture de portière. Le dispositif de vide-poche n'est pas fixé à la paroi latérale de la garniture de portière. Notamment, la partie inférieure du dispositif de vide poche, c'est-à-dire la partie située du côté du bas de la portière, autrement dit du côté du plancher du véhicule lorsque la portière est installée sur un véhicule, n'est pas fixé à la paroi inférieure, c'est-à-dire située en vis-à-vis, de la garniture de portière.

Un problème réside dans le fait que, la garniture de portière étant creuse, ladite paroi inférieure de la garniture de portière peut se déformer, notamment lors du transport de ladite garniture vers une usine en vue de son installation sur une portière de véhicule.

En outre, des excroissances peuvent être prévues pour s'étendre depuis la partie inférieure du dispositif de vide-poche pour aider au guidage du dispositif de vide-poche lors de sa mise en place en vue de sa fixation sur une garniture de portière. Des feutrines peuvent alors être requises de façon à absorber les vibrations de ces excroissances.

La publication JP2016 141197A divulgue un dispositif de vide-poche d'après la préambule de la revendication 1.

Il existe donc un besoin pour un dispositif de vide-poche à fixation renforcée pour rigidifier l'ensemble formé d'un tel dispositif de vide-poche et d'une garniture de portière à laquelle il est fixé.

### PRESENTATION DE L'INVENTION

A cette fin, la présente invention concerne un dispositif vide-poche de garnissage de portière de véhicule, comprenant un logement concave et présentant une bordure périphérique s'étendant transversalement par rapport au bord du logement, ledit dispositif vide-poche de garnissage de portière étant destiné à être fixé à une garniture de portière et à se trouver pris en sandwich entre ladite garniture de portière et un panneau de portière, notamment une doublure de portière, dans une portière de véhicule, ledit dispositif vide-poche de garnissage de portière de véhicule étant remarquable en ce qu'il comprend au moins un élément de renfort et de liaison, issu de matière du dispositif vide-poche et s'étendant depuis la bordure périphérique, ledit au moins un élément de renfort et de liaison étant configuré pour venir en contact mécanique avec la garniture de portière et pour être fixé par soudure à ladite garniture de portière.

D'après l'invention, ledit au moins un élément de renfort et de liaison s'étend depuis la bordure périphérique, orthogonalement au plateau, ledit au moins un élément de renfort et de liaison étant destiné à longer une portion inférieure d'une paroi latérale de la garniture de portière.

Avantageusement, ledit au moins un élément de renfort et de liaison comprend une portion de renfort ayant pour origine la bordure périphérique et, à l'extrémité de ladite portion de renfort, une portion de fixation, destinée à être fixée par soudure à ladite garniture de portière.

Avantageusement, ladite portion de fixation est orthogonale à la portion de renfort qui s'étend orthogonalement au plateau.

Avantageusement, ladite portion de fixation comprend un orifice pour permettre le passage d'un moyen de fixation ou de guidage.

Avantageusement, le dispositif de vide-poche selon l'invention comprend une pluralité d'éléments de renfort et de liaison répartis le long d'un bord inférieur de la bordure périphérique.

La présente invention concerne aussi un ensemble d'une garniture de portière et d'un dispositif vide-poche tel que brièvement décrit ci-dessus, pour une portière de véhicule, la garniture de portière présentant un plateau de garniture et une paroi latérale s'étendant orthogonalement au plateau de garniture, vers l'extérieur du véhicule, ledit plateau présentant une ouverture pour accéder au logement du dispositif vide-poche, le dispositif étant fixé à la garniture de portière, le logement étant en vis-à-vis de l'ouverture, le logement faisant directement face à ladite ouverture, ledit au moins élément de renfort et de liaison s'étendant le long de la paroi latérale de la garniture de portière et ledit au moins élément de renfort et de liaison étant soudé à la garniture de portière.

Avantageusement, la garniture de portière présente une portion inférieure de la paroi latérale, correspondant à un pan de la paroi latérale destiné à se trouver du côté d'un plancher du véhicule, ledit au moins un élément de renfort et de liaison s'étendant le long de ladite portion inférieure de la paroi latérale de la garniture de portière et ledit au moins élément de renfort et de liaison étant soudé à ladite portion inférieure de la paroi latérale de la garniture de portière.

La présente invention vise également une portière pour un véhicule, comprenant une pièce de carrosserie, une doublure de portière et un ensemble tel que brièvement décrit ci-dessus.

L'invention concerne en outre un véhicule comprenant au moins une telle portière.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] est une représentation schématique d'une portière de véhicule automobile en vue éclatée ;
[Fig. 2] est une représentation schématique d'un dispositif de vide-poche selon l'invention ;
[Fig. 3] est une représentation schématique d'un dispositif de vide-poche selon l'invention, fixé sur une garniture de portière dont seule une portion est représentée.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Dans la suite, on décrit l'invention principalement dans le cas contexte d'une mise en oeuvre dans un véhicule automobile. Cependant, la mise en oeuvre du dispositif selon l'invention dans tout véhicule terrestre est également visée par la présente invention.

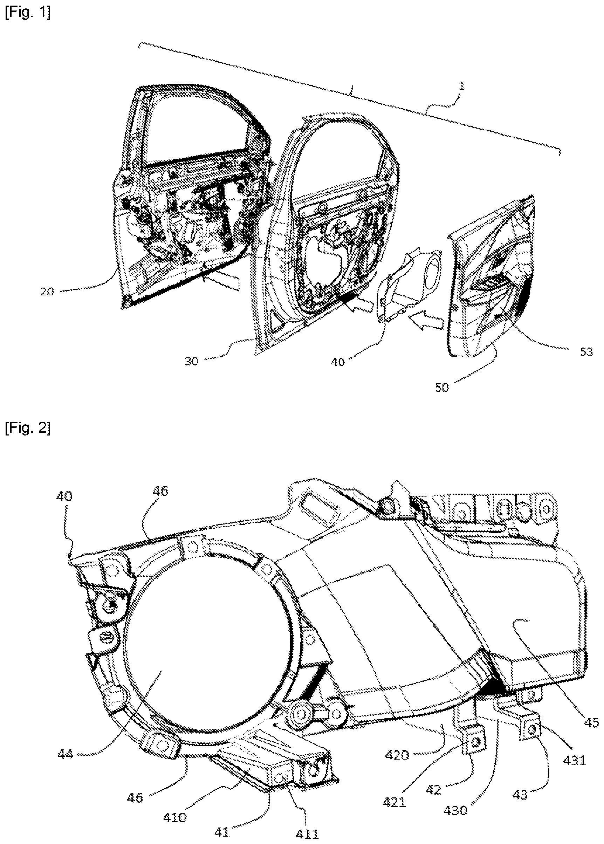

En référence à la figure 1, on vise la mise en oeuvre du dispositif de vide-poche selon l'invention dans une portière 1 de véhicule. Une telle portière 1 comprend une structure multicouche avec, de l'extérieur vers l'intérieur de l'habitacle, une pièce de carrosserie 20 formant la couche extérieure de la portière 1, une doublure de portière 30, un dispositif de vide-poche 40 fixé à la doublure de portière 30, d'un côté, et de l'autre à la garniture de portière 50.

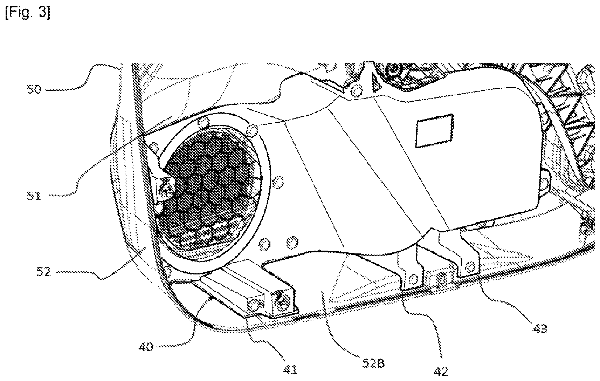

Les figures 2 et 3 montrent le dispositif de vide-poche 40 de garnissage de portière, selon l'invention. Sur la figure 2, le dispositif de vide-poche 40 est montré seul et, sur la figure 3, on le voit fixé sur une garniture de portière 50.

Le dispositif de vide-poche 40 est formé d'une surface de base, autrement dit un plateau, qui présente un enfoncement, autrement dit un creux concave ou encore une cavité formant un logement 45 du dispositif de vide-poche 40. Le dispositif de vide-poche 40 est par exemple en plastique moulé.

Le dispositif de vide-poche 40 peut également comprendre une ouverture 44 aménagée dans la surface de base pour permettre le passage d'élément d'un haut-parleur intégré la portière 1 par exemple. Au-delà du logement 45 et de l'ouverture éventuelle 44, le plateau du dispositif de vide-poche forme une bordure périphérique 46 du dispositif de vide-poche 40.

La garniture 50 présente une forme de bac, avec un fond 51, autrement dit un plateau de garnissage, comportant une portion sensiblement plane, et une paroi latérale 52 s'étendant orthogonalement au fond 51, en direction de la pièce de carrosserie 20 de la portière 1. Le fond 51 de la garniture de portière 50 présente une ouverture 53 (visible sur la figure 1) pour accéder au dispositif de vide-poche 40, et plus précisément au logement 45 dudit dispositif de vide-poche 40.

Le dispositif de vide-poche 40 est configuré pour être fixé à la garniture de portière 50. Le logement 45 est configuré pour se trouver alors en vis-à-vis de l'ouverture 53 de la garniture de portière 50.

La paroi latérale 52 de la garniture de portière 50 comporte une portion inférieure 52B. D'une part, comme expliqué précédemment, cette portion inférieure 52B de la paroi latérale 52 de la garniture de portière 50 présente une fragilité a priori : sa finesse et le caractère creux de la garniture de portière 50 font que, dans l'état de l'art, cette portion inférieure 52B peut s'affaisser lors du conditionnement et du transport de la garniture de portière 50, par exemple à destination d'une usine.

Comme représenté sur les figures 2 et 3, pour pallier ce problème, le dispositif de vide-poche 40 selon l'invention comprend au moins un élément de renfort et de liaison 41, 42, 43 destiné à être soudé à la portion inférieure 52B de la paroi latérale 52 de la garniture de portière 50.

Les éléments de renfort et de liaison 41, 42, 43 permettent la fixation rigide du dispositif de vide-poche 40 à la garniture de portière 50.

D'après l'invention, et représenté sur les figures, les éléments de renfort et de liaison 41, 42, 43 s'étendent depuis la bordure 46 du dispositif de vide-poche 40, orthogonalement à la surface de base, dans une direction opposée au fond 51 de la garniture de portière 50, de sorte à longer la paroi latérale 52.

Plus précisément, les éléments de renfort et de liaison 41, 42, 43 s'étendent le long de la portion inférieure 52B de la paroi latérale 52 de la garniture de portière 50.

De manière préférée, les éléments de renfort et de liaison 41, 42, 43 s'étendent en contact mécanique ou en quasi-contact mécanique le long de la portion inférieure 52B de la paroi latérale 52 de la garniture de portière 50, de façon à empêcher tout affaissement de ladite portion inférieure 52B dès lors que le dispositif de vide-poche 40 est fixé à la garniture de portière 50.

De préférence, les éléments de renfort et de liaison 41, 42, 43 présentent une portion de renfort 410, 420, 430 qui s'étend, comme détaillé ci-dessus, le long de la portion inférieure 52B de la paroi latérale 52 de la garniture de portière 50, et une portion de fixation, formant notamment un replat 411, 421, 431 orthogonal à la portion de renfort 410, 420, 430.

Les replats 411, 421, 431 peuvent comprendre un trou traversant pour permettre le passage de vis ou de moyens de guidage, tel que des ergots, ou simplement pour faciliter la soudure prévue pour relier le dispositif de vide-poche 40 à la garniture de portière 50. Une soudure est en effet prévue pour assurer la fixation rigide du dispositif de vide-poche 40 à la garniture de portière 50 au niveau des replats 411, 421, 431.

La soudure des éléments de liaison 41, 42, 43 à la garniture de portière 50 permet d'assurer une fixation rigide du dispositif de vide-poche 40 à la garniture de portière 50. On empêche ainsi les vibrations de la partie inférieure du dispositif de vide-poche 40 et on s'affranchit de la mise en place de feutrines, qui s'avèrent nécessaires, dans l'état de l'art, pour atténuer les vibrations de la partie inférieure du dispositif de vide-poche.

En outre, la fixation rigide du dispositif de vide-poche 40 selon l'invention à la garniture de portière 50 permet un meilleur placage dudit dispositif de vide-poche 40 contre ladite garniture de portière 50 et améliore la qualité du vissage de l'ensemble formé par le dispositif de vide-poche 40 et la garniture de portière 50 sur la doublure de portière 30, en l'absence de déformation de ladite garniture de portière 50, notamment dans sa portion inférieure 52B de la paroi latérale 52.

## Revendications

1. Dispositif de vide-poche (40) de garnissage de portière (1) de véhicule, comprenant un plateau comportant un logement (45) concave et présentant une bordure périphérique (46) s'étendant transversalement par rapport au bord du logement (45), ledit dispositif vide-poche (40) de garnissage de portière étant destiné à être fixé à une garniture de portière (50) et à se trouver pris en sandwich entre ladite garniture de portière (50) et un panneau de portière (30), notamment une doublure de portière, dans une portière (1) de véhicule, ledit dispositif de vide-poche (40) de garnissage de portière de véhicule étant **caractérisé en ce qu'**il comprend au moins un élément de renfort et de liaison (41, 42, 43), issu de matière du dispositif vide-poche (40) et s'étendant depuis la bordure périphérique (46), ledit au moins un élément de renfort et de liaison (41, 42, 43) étant destiné à venir en contact mécanique avec la garniture de portière (50) et pour être fixé par soudure à ladite garniture de portière (50), ledit au moins un élément de renfort et de liaison (41, 42, 43) s'étendant depuis la bordure périphérique (46), orthogonalement au plateau, ledit au moins un élément de renfort et de liaison (41, 42, 43) étant destiné à longer une portion inférieure (52B) d'une paroi latérale (52) de la garniture de portière (50).

2. Dispositif de vide-poche (40) selon l'une des revendications précédentes, dans lequel ledit au moins un élément de renfort et de liaison (41, 42, 43) comprend une portion de renfort (410, 420, 430) ayant pour origine la bordure périphérique (46) et, à l'extrémité de ladite portion de renfort (410, 420, 430), une portion de fixation (411, 421, 431), destinée à être fixée par soudure à ladite garniture de portière (50).

3. Dispositif de vide-poche (40) selon la revendication précédente, ladite portion de fixation (411, 421, 431) étant orthogonale à la portion de renfort (410, 420, 430) qui s'étend orthogonalement au plateau.

4. Dispositif de vide-poche (40) selon la revendication 2 ou 3, ladite portion de fixation (411, 421, 431) comprend un orifice pour permettre le passage d'un moyen de fixation ou de guidage.

5. Dispositif de vide-poche (40) selon l'une des revendications précédentes, comprenant une pluralité d'éléments de renfort et de liaison (41, 42, 43) répartis le long d'un bord inférieur de la bordure périphérique (46).

6. Ensemble d'une garniture de portière (50) et d'un dispositif vide-poche (40) selon l'une des revendications précédentes, pour une portière (1) de véhicule, la garniture de portière (50) présentant un plateau (51) de garniture et une paroi latérale (52) s'étendant orthogonalement au plateau (51) de garniture, vers l'extérieur du véhicule, ledit plateau (51) présentant une ouverture (53) pour accéder au logement (45) du dispositif vide-poche (40), le dispositif de vide poche (40) étant fixé à la garniture de portière (50), le logement (45) étant en vis-à-vis de l'ouverture (53), le logement (45) faisant directement face à ladite ouverture (53), ledit au moins élément de renfort et de liaison (41, 42, 43) s'étendant le long de la paroi latérale (52) de la garniture de portière (50) et ledit au moins élément de renfort et de liaison (41, 42, 43) étant soudé à la garniture de portière (50).

7. Ensemble selon la revendication précédente, la garniture de portière (50) présentant une portion inférieure (52B) de la paroi latérale (52), correspondant à un pan de la paroi latérale (52) destiné à se trouver du côté d'un plancher du véhicule, ledit au moins un élément de renfort et de liaison (41, 42, 43) s'étendant le long de ladite portion inférieure (52B) de la paroi latérale (52) de la garniture de portière (50) et ledit au moins élément de renfort et de liaison (41, 42, 43) étant soudé à ladite portion inférieure (52B) de la paroi latérale (52) de la garniture de portière (50).

8. Portière (1) pour un véhicule, comprenant une pièce de carrosserie (20), une doublure de portière (30) et un ensemble selon la revendication 6 ou 7.

9. Véhicule comprenant au moins une portière (1) selon la revendication précédente.

## Patentansprüche

1. Vorrichtung (40) für einen Türverkleidungshohlraum (1) für ein Fahrzeug, umfassend eine Platte mit einem konkaven Gehäuse (45) und mit einem Umfangsrand (46), der sich quer zu dem Rand des Gehäuses (45) erstreckt, wobei die Vorrichtung (40) für einen Türverkleidungshohlraum (40) dazu bestimmt ist, an einem Türverkleidungssatz (50) befestigt zu werden und zwischen dem Türverkleidungssatz (50) und einem Türpaneel (30), insbesondere einem Türverkleidungssatz, in einer Fahrzeugtür (1) sandwichartig angeordnet zu werden, wobei die Vorrichtung Taschenvakuumvorrichtung (40) zur Türverkleidung eines Fahrzeugs, **dadurch gekennzeichnet, dass** sie mindestens ein Verstärkungs- und Verbindungselement (41, 42, 43) umfasst, das aus einem Material der Taschenvakuumvorrichtung (40) stammt und sich von dem Umfangsrand (46) erstreckt, wobei das mindestens eine Verstärkungs- und Verbindungselement (41, 42, 43) dazu bestimmt ist, mit der Türverkleidung (50) in mechanischen Kontakt zu kommen und an der Türverkleidung (50) durch Verschweißen befestigt zu werden, wobei das mindestens eine Verstärkungs- und Verbindungselement Verbindungselement (41, 42, 43), das sich von dem Umfangsrand (46) rechtwinklig zur Platte erstreckt, wobei das wenigstens eine Verstärkungs- und Verbindungselement (41, 42, 43) dazu bestimmt ist, einen unteren Abschnitt (52B) einer Seitenwand (52) des Türbelags (50) zu verlaufen.

2. Taschenvakuumvorrichtung (40) nach einem der vorhergehenden Ansprüche, bei der das wenigstens eine Verstärkungs- und Verbindungselement (41, 42, 43) einen Verstärkungsabschnitt (410, 420, 430), der von der Umfangskante (46) ausgeht, und am Ende des Verstärkungsabschnitts (410, 420, 430) einen Befestigungsabschnitt (411, 421, 431) zum Verschweißen an der Porendichtung aufweist Decke (50).

3. Taschenvakuumvorrichtung (40) nach dem vorhergehenden Anspruch, wobei der Befestigungsabschnitt (411, 421, 431) orthogonal zu dem Verstärkungsabschnitt (410, 420, 430) ist, der sich orthogonal zu der Platte erstreckt.

4. Taschenvakuumvorrichtung (40) nach Anspruch 2 oder 3, wobei der Befestigungsabschnitt (411, 421, 431) eine Öffnung aufweist, um den Durchgang einer Befestigungs- oder Führungseinrichtung zu ermöglichen.

5. Taschenvakuumvorrichtung (40) nach einem der vorhergehenden Ansprüche, die eine Vielzahl von Verstärkungs- und Verbindungselementen (41, 42, 43) aufweist, die entlang einer unteren Kante des Umfangsrandes (46) verteilt sind.

6. Anordnung aus einer Türverkleidung (50) und einer Absenkvorrichtung (40) nach einem der vorhergehenden Ansprüche für eine Fahrzeugtür (1), wobei die Türverkleidung (50) eine Verkleidungstafel (51) und eine Seitenwand (52) aufweist, die sich senkrecht zur Verkleidungstafel (51) zur Außenseite des Fahrzeugs erstreckt, wobei die Tafel (51) eine Öffnung (53) für den Zugang zum Gehäuse (45) der Absenkvorrichtung (40) aufweist, wobei die Absenkvorrichtung (40) an der Türverkleidung (50), wobei das Gehäuse (45) der Öffnung (53) gegenüberliegt, wobei das Gehäuse (45) der Öffnung (53) direkt gegenüberliegt, wobei sich das mindestens eine Verstärkungs- und Verbindungselement (41, 42, 43) entlang der Seitenwand (52) der Türverkleidung (50) erstreckt und das mindestens eine Verstärkungs- und Verbindungselement (41, 42, 43) an die Türverkleidung (50) angeschweißt ist.

7. Anordnung nach dem vorhergehenden Anspruch, wobei die Türverkleidung (50) einen unteren Abschnitt (52B) der Seitenwand (52) aufweist, der einer Seite der Seitenwand (52) entspricht, die auf der Seite eines Fahrzeugbodens angeordnet ist, wobei sich das mindestens eine Verstärkungs- und Verbindungselement (41, 42, 43) entlang des unteren Abschnitts (52B) der Seitenwand (52) der Türverkleidung (50) erstreckt und das mindestens eine Verstärkungs- und Verbindungselement (41, 42, 43) ist an den unteren Abschnitt (52B) der Seitenwand (52) der Türverkleidung (50) angeschweißt.

8. Tür (1) für ein Fahrzeug, umfassend ein Karosserieteil (20), eine Türverkleidung (30) und eine Anordnung nach Anspruch 6 oder 7.

9. Fahrzeug mit mindestens einer Tür (1) nach dem vorhergehenden Anspruch.

## Claims

1. A pocket-emptying device (40) for a vehicle door trim (1), comprising a tray comprising a concave housing (45) and having a peripheral edge (46) extending transversely with respect to the edge of the housing (45), said pocket-emptying device (40) for the door trim being intended to be fixed to a door trim (50) and to be sandwiched between said door trim (50) and a door panel (30), in particular a door lining, in a vehicle door (1), said vacuum device A pocket (40) for the lining of a vehicle door being **characterized in that** it comprises at least one reinforcing and connecting element (41, 42, 43), originating from the material of the pocket-emptying device (40) and extending from the peripheral edge (46), said at least one reinforcing and connecting element (41, 42, 43) being intended to come into mechanical contact with the door lining (50) and to be fixed by welding to said door lining (50), said at least one reinforcing and connecting element (41, 42, 43) extending from the peripheral edge (46), orthogonally to the plate, said at least one reinforcing and connecting element (41, 42, 43) being intended to run along a lower portion (52B) of a side wall (52) of the door trim (50).

2. Pocket emptying device (40) according to any preceding claim, in which said at least one reinforcing and connecting element (41, 42, 43) comprises a reinforcing portion (410, 420, 430) originating from the peripheral edge (46) and, at the end of said reinforcing portion (410, 420, 430), a fixing portion (411, 421, 431), intended to be fixed by welding to said door trim (50).

3. Pocket-emptying device (40) according to the preceding claim, the said fixing portion (411, 421, 431) being orthogonal to the reinforcing portion (410, 420, 430) which extends orthogonally to the tray.

4. Pocket-emptying device (40) according to claim 2 or 3, said fixing portion (411, 421, 431) comprises an orifice to allow the passage of a fixing or guiding means.

5. Pocket-emptying device (40) according to one of the preceding claims, comprising a plurality of reinforcing and connecting elements (41, 42, 43) distributed along a lower edge of the peripheral border (46).

6. Assembly of a door trim (50) and of a pocket-emptying device (40) according to one of the preceding claims, for a vehicle door (1), the door trim (50) having a trim plate (51) and a side wall (52) extending orthogonally to the trim plate (51), towards the outside of the vehicle, said plate (51) having an opening (53) for accessing the housing (45) of the pocket-emptying device (40), the pocket-emptying device (40) being fixed to the vehicle door trim (50), the housing (45) facing the opening (53), the housing (45) directly facing said opening (53), said at least one reinforcing and connecting element (41, 42, 43) extending along the side wall (52) of the door trim (50) and said at least one reinforcing and connecting element (41, 42, 43) being welded to the door trim (50).

7. Assembly according to the preceding claim, the door trim (50) having a lower portion (52B) of the side wall (52), corresponding to a section of the side wall (52) intended to be on the side of a floor of the vehicle, said at least one reinforcing and connecting element (41, 42, 43) extending along said lower portion (52B) of the side wall (52) of the door trim (50) and said at least one reinforcing and connecting element (41, 42, 43) being welded to said lower portion (52 B) of the side wall (52) of the door trim (50).

8. Door (1) for a vehicle, comprising a bodywork part (20), a door lining (30) and an assembly according to claim 6 or 7.

9. Vehicle comprising at least one door (1) according to the preceding claim.
